# EUROPEAN PATENT APPLICATION

(11) **EP 1 361 653 A2**
(43) Date of publication of application: **12.11.2003**
(21) Application number: 03010375.8
(22) Date of filing: 08.05.2003
(51) Int. Cl.: H02M 3/337, H02J 7/35

(54) **Power supplying apparatus, design method of the same, and power generation apparatus**

(30) Priority: 10.05.2002 JP 2002136141
(71) Applicant: CANON KABUSHIKI KAISHA, Ohta-ku, Tokyo (JP)
(72) Inventor: Takehara, Nobuyoshi, c/o Canon Kabushiki Kaisha, Tokyo (JP); Toyomura, Fumitaka, c/o Canon Kabushiki Kaisha, Tokyo (JP); Suzui, Masaki, c/o Canon Kabushiki Kaisha, Tokyo (JP)
(74) Representative: Leson, Thomas Johannes Alois, Dipl.-Ing.

(57) **Abstract**

Although increasing the switching frequency is effective to downsize a power supplying apparatus, the switching loss of a switching element increases if the switching frequency is increased. In a power supplying apparatus including a transformer having a very high boosting ratio, and a plurality of switching elements for supplying AC power to the primary side of the transformer, the frequency of the AC power is set to 0.25 to 2 times the self-resonance frequency of the transformer.

## Description

### FIELD OF THE INVENTION

The present invention relates to a power supplying apparatus, a design method of the same, and a power generation apparatus and, more particularly, to a power supplying apparatus for converting DC power supplied from a solar cell.

### BACKGROUND OF THE INVENTION

Solar light power generation systems have been rapidly put to practical use, and a large number of solar light power generation systems are operated on the market. These systems are power supplying apparatuses including solar cells and high-efficiency power converters using switching elements.

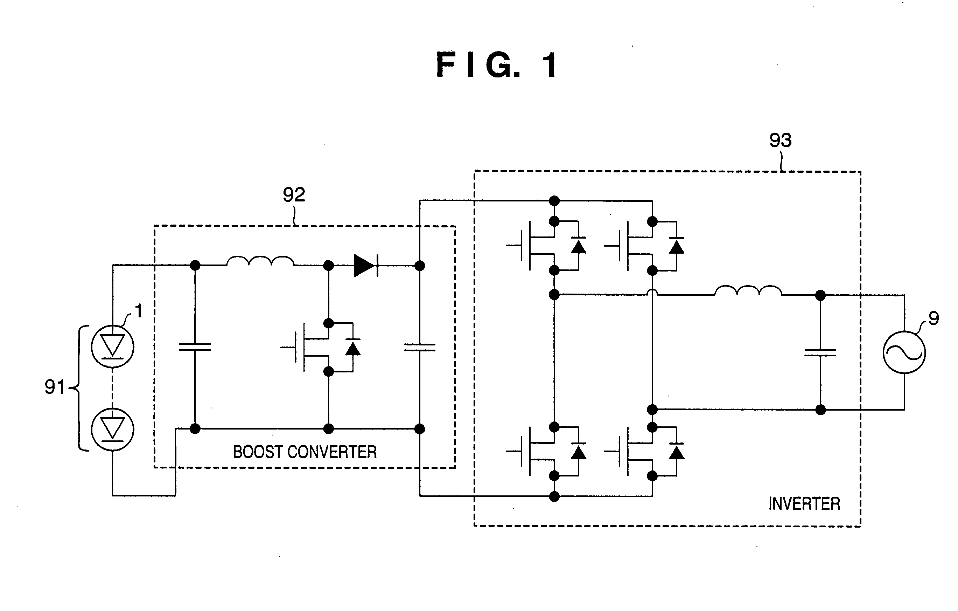

Fig. 1 is a circuit diagram showing the circuit configuration of a solar cell power supply. The voltage of output from a solar cell array 91 is raised by a step-up converter 92 and converted into AC power by an inverter 93. This AC power is supplied to a commercial power system (to be referred to as a "system" hereinafter) 9.

To downsize the inverter and converter described above, increasing the switching frequency is effective. In solar cell power supplies, therefore, it is being attempted to increase the switching frequency in order to downsize transformers, inductors, smoothing capacitors, and the like. However, if the switching frequency is raised, the switching loss of the switching element increases.

To prevent this increase in switching loss, a resonant switching system can be used. However, in a solar cell power supply in which the load readily fluctuates, it is very difficult to control the switching timing to the zero point of an electric current or of a voltage. Therefore, no solar cell power supply using the resonant switching system is presently put on the market.

### SUMMARY OF THE INVENTION

The present invention has been made to individually or collectively solve the above problems, and has its object to increase the conversion efficiency of a power supplying apparatus.

To achieve this object, a preferred aspect of the present invention discloses a power supplying apparatus comprising:
a transformer having a very high boosting ratio; and
a plurality of switching elements for supplying AC power 0.25 to 2 times a self-resonance frequency of the transformer to a primary side of the transformer.

It is another object of the present invention to facilitate designing a power supplying apparatus having a high conversion efficiency.

To achieve this object, a preferred aspect of the present invention discloses a design method of a power supplying apparatus comprising a transformer having a very high boosting ratio, and a plurality of switching elements for supplying AC power to a primary side of the transformer, the method comprising a step of setting a frequency of the AC power to 0.25 to 2 times a self-resonance frequency of the transformer.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a circuit diagram showing the circuit configuration of a solar cell power supply;
Fig. 2 is a circuit diagram showing the circuit configuration of a solar cell power supply according to an embodiment;
Fig. 3 is a block diagram showing the arrangement of a gate driving circuit;
Fig. 4 is a view showing connection when the self-resonance frequency of a transformer is measured;
Fig. 5 is a graph showing the result of measurement of the conversion efficiency as a function of the switching frequency;
Fig. 6 is a circuit diagram showing the circuit configuration of a solar cell power supply according to the second embodiment;
Fig. 7 is a graph showing the result of measurement of the conversion efficiency as a function of the switching frequency in the second embodiment;
Fig. 8 is a circuit diagram showing the circuit configuration of a solar cell power supply according to the third embodiment;
Fig. 9 is a graph showing the result of measurement of the conversion efficiency as a function of the switching frequency in the third embodiment;
Fig. 10 is a table showing the specifications of a transformer according to the first embodiment;
Fig. 11 is a table showing the specifications of a transformer according to the second embodiment; and
Fig. 12 is a table showing the specifications of a transformer according to the third embodiment.

### DETAILED DESCRIPTION OF THE PREFERRED EMBODIMENTS

Solar cell power generation apparatuses according to embodiments of the present invention will be described in detail below with reference to the accompanying drawings.

### [Summary]

The present inventors sought to downsize a nonresonant switching power supply system and increase the efficiency of the system. As a consequence, the present inventors found that a power supplying apparatus can be downsized and its efficiency can be increased by lowering the input voltage to an inverter, increasing the self-resonance frequency of a transformer, and driving a switching element connected to the transformer at a switching frequency to be described later. Conventionally, there are no firm findings about the relationship between the electric characteristics depending on the structure of a transformer and the switching frequency, so the switching frequency is determined partly experimentally. However, the present inventors made extensive studies and found a simple design method of obtaining a high conversion efficiency.

The following explanation reveals a method of determining a switching frequency at which a high conversion efficiency is obtained in a power converter using a nonresonant switching system which uses a transformer, and discloses a small, simple, and inexpensive solar cell power supply having a high conversion efficiency.

### First Embodiment

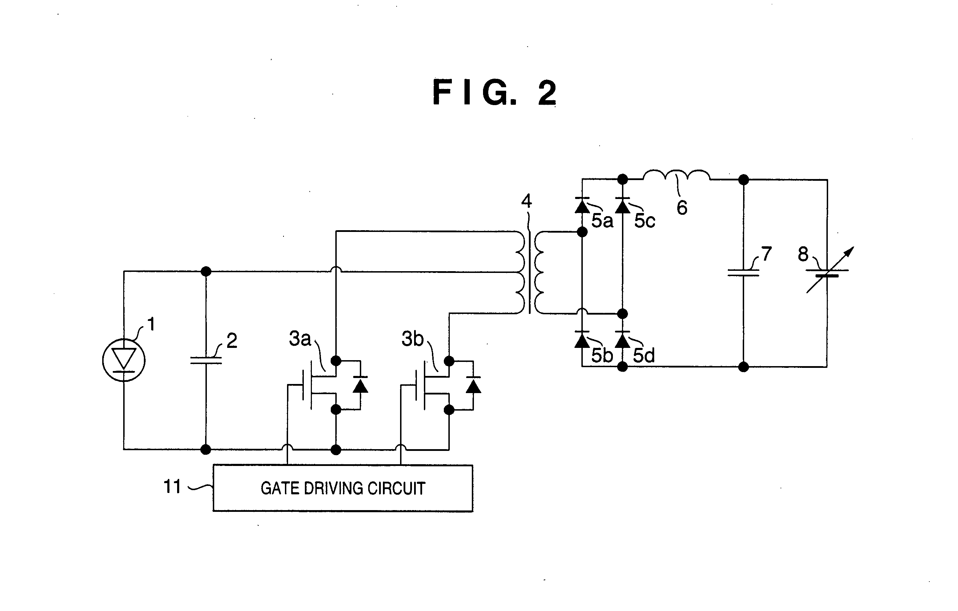

Fig. 2 is a circuit diagram showing the circuit configuration of a solar cell power supply according to the embodiment.

### [Solar Cell]

As a solar cell 1, a thin-film solar cell in which an amorphous layer and nanocrystalline layer are stacked is used. Under intensive solar radiation (spectral AM = 1.5, 100 mW/cm², cell temperature = 55°C), the electric output of the solar cell 1 has 1.0 V and 10.0 A. The structure, manufacturing method, collecting terminal mounting method, and the like of this stacked solar cell have no relation with the substance of the present invention, so a detailed explanation thereof will be omitted. However, these details are disclosed in, e.g., Japanese Patent Laid-Open Nos. 11-243219 and 8-139439. Also, the type of solar cell is not particularly limited, so a crystalline silicon solar cell can also be used. That is, it is only necessary to select a solar cell from which a necessary output can be obtained in accordance with electric power to be supplied to a load. Note that a fuel cell which has advanced significantly in recent years has an output voltage (about 0.5 to 1.5 V) and an electric current (area dependent) similar to those of a solar cell, and hence can be used as a constituent element of the embodiment.

### [Power Conversion Circuit]

As the primary system of a power conversion circuit, this embodiment uses a nonresonant push-pull switching system. Since the voltage of the solar cell 1 is as low as 1.0 V, MOSFETs (IRF P3703 manufactured by International Rectifier) are used as switching elements 3a and 3b. To keep low loss in a low-voltage region, low-resistance switching elements are necessary. Practically, a MOSFET which is a unipolar element is the only usable device. If the voltage of the solar cell 1 is higher, a bipolar element such as an IGBT is also usable. The input impedance of the gate of a MOSFET or IGBT is very high, and this is favorable to simplify a driving circuit.

To allow the input power supply of the power conversion circuit to be regarded as a voltage source, a 6.3-V, 1,000-µF capacitor (OS-CON (trade name)) manufactured by Sanyo Electric Co., Ltd. is used as an input capacitor 2 . The OS CON is suited to the embodiment because it has a low equivalent series resistance (ESR) and excellent high-frequency characteristics. It is also possible to use a capacitor having a small ESR, such as a stacked ceramic capacitor or tantalum electrolytic capacitor. The input capacitor 2 allows the input power supply of the power conversion circuit to be regarded as a voltage source. So, this power conversion circuit functions as a so-called voltage source converter.

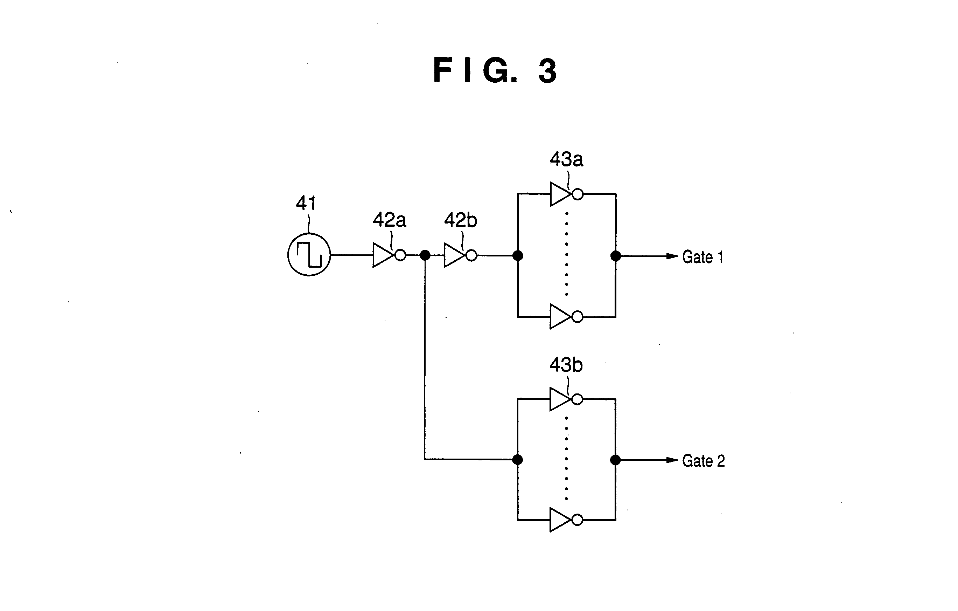

Fig. 3 is a block diagram showing the arrangement of a gate driving circuit 11. For the sake of simplicity, a signal source 41 is a circuit (LTC1799 manufactured by Linear Technology) which oscillates a rectangular wave having on-duty fixed to 50%. The output rectangular wave from the signal source 41 is amplified by a current amplifier formed by connecting six inverters (74AC04 CMOS logic ICs) in parallel, via inverters (74AC04 CMOS logic ICs) 42a and 42b which function as buffers, and is output as two gate signals which drive the switching elements 3a and 3b and have opposite phases. Instead of this configuration, a number of well-known circuits, e.g., a commercially available operational amplifier, can be used as the gate driving circuit 11.

### [Rectifying Circuit]

Surface mount chip type high-speed rectifier diodes (ES1D manufactured by General Semiconductor) having a withstand voltage of 200 V and a maximum current of 0.6 A are used as rectifier diodes 5a to 5d, thereby forming a full-bridge circuit. The use of the full-bridge circuit makes a secondary center tap of a transformer 4 unnecessary, thereby effectively downsizing the transformer 4. In this embodiment, the boosting ratio of the transformer 4 is high, so the secondary electric current is relatively small. Under the condition, the diodes 5a to 5d are much smaller than the transformer 4. Therefore, downsizing the transformer 4 greatly contributes to downsizing of the whole power converter.

A commercially available surface mount inductor (2.2 µH, manufactured by Coil Craft) is used as an inductor 6. A commercially available electrolytic capacitor (400 V, 220 µF) is used as an output capacitor 7. These parts are not particularly limited. So, it is possible to select appropriate products on the market by taking so-called designing factors into consideration in accordance with the output voltage, output current, and switching frequency.

### [Transformer]

The present inventors made extensive studies and found that the transformer 4 preferably has a high self-resonance frequency. To form this transformer, it is favorable to reduce the stray capacity, more specifically, reduce the number of turns of winding. However, if the number of turns is reduced, the flux density of the magnetic core increases, and this increases the core loss. This poses another problem that the efficiency of the transformer lowers unless the size of the magnetic core is increased, so it becomes impossible to obtain a small-sized, high-efficiency power converter. Accordingly, the present inventors noted the fact that the number of turns can be reduced by decreasing the primary voltage of the transformer 4 to a low voltage (more specifically, 2.0 V or less), without largely increasing the size of the magnetic core.

That is, by decreasing the voltage applied to the primary winding of the transformer 4 to 2.0 V or less, it is possible to reduce the number of turns of this primary winding to about 1 to 5 and obtain a highly efficient transformer. When the number of turns of the primary winding is thus reduced, the number of turns of the secondary winding is also reduced, so the parasitic stray capacity of the transformer 4 can be reduced.

In addition, in a solar cell power supply which interconnects to the system with a low-voltage input, the ratio (transformation ratio) of the number of turns of the primary winding to that of the secondary winding increases, so the number of turns of the secondary winding must be 100 times that of the primary winding or more. This often increases the inductance of the winding itself. However, reducing the number of turns of the primary winding reduces the number of turns of the secondary winding, thereby decreasing the inductance of the winding itself.

The self-resonance frequency of the transformer 4 is preferably 10 to 400 kHz, and more preferably, 20 to 200 kHz. When the switching element is driven at a switching frequency to be described later by using the transformer 4 having this self-resonance frequency, switching at 20 to 200 kHz which is desired as a nonresonant power supply can be performed. Driving the switching element at this frequency is favorable because no noise is produced and the switching loss of the switching element is low.

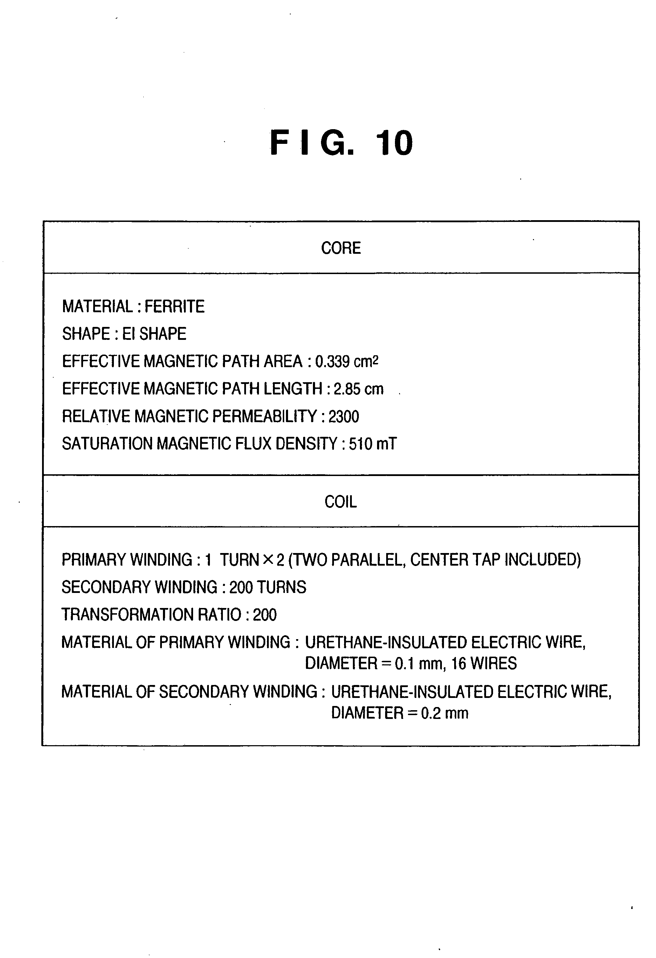

The specifications of the transformer 4 are as shown in Fig. 10.

### [Measurement of Self-Resonance Frequency of Transformer]

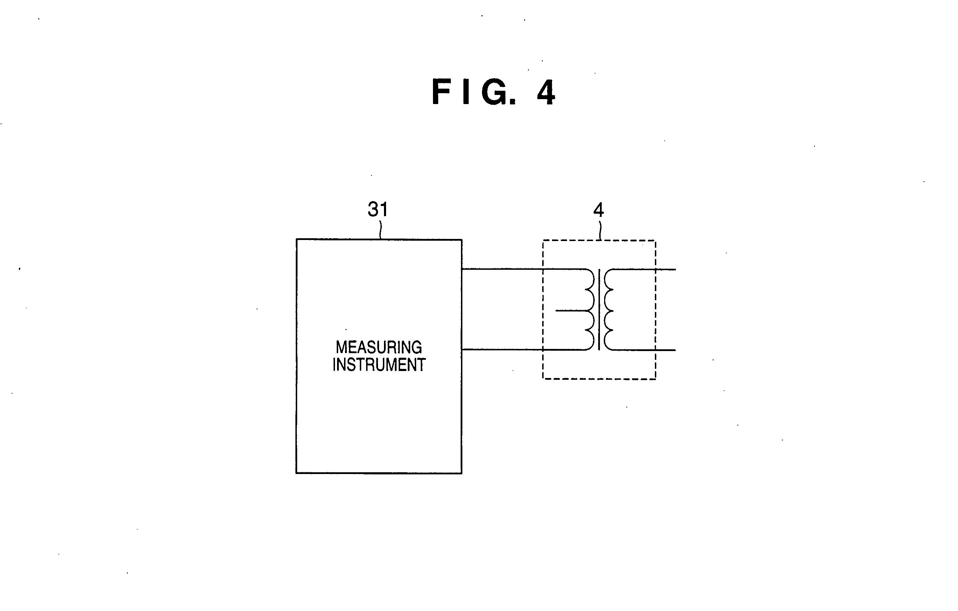

The self-resonance frequency of the transformer 4 is measured using a frequency response analyzer (FRA5095 manufactured by NF Corporation) on the market. Fig. 4 is a view showing connection when the self-resonance frequency of the transformer 4 is to be measured. With the secondary side of the transformer 4 opened, a meter 31 is connected to the primary side, and the impedance of the transformer 4 is measured while the frequency of a signal supplied to the transformer 4 is changed. A frequency at which the impedance is a maximum is the self-resonance frequency. When measurement is performed by this method, a plurality of resonance points appear. In this embodiment, a resonance point at the lowest frequency is important, and this resonance point best represents characteristics unique to the transformer 4. The self-resonance frequency of the transformer 4 formed by the above specifications was 88 kHz. Note that the self-resonance frequency may also be measured by another method, e.g., the use of an impedance meter on the market.

### [Load]

As a load 8, an electronic load device capable of constant-voltage operation is used. The load 8 is a substitute of a battery. In actual operation, a battery or resistance load is used. When the power converter of the embodiment is used in place of a step-up converter 92 shown in Fig. 1, an inverter 93 which interconnects to a system 9 is a load.

### [Operation Check of Power Supplying Apparatus]

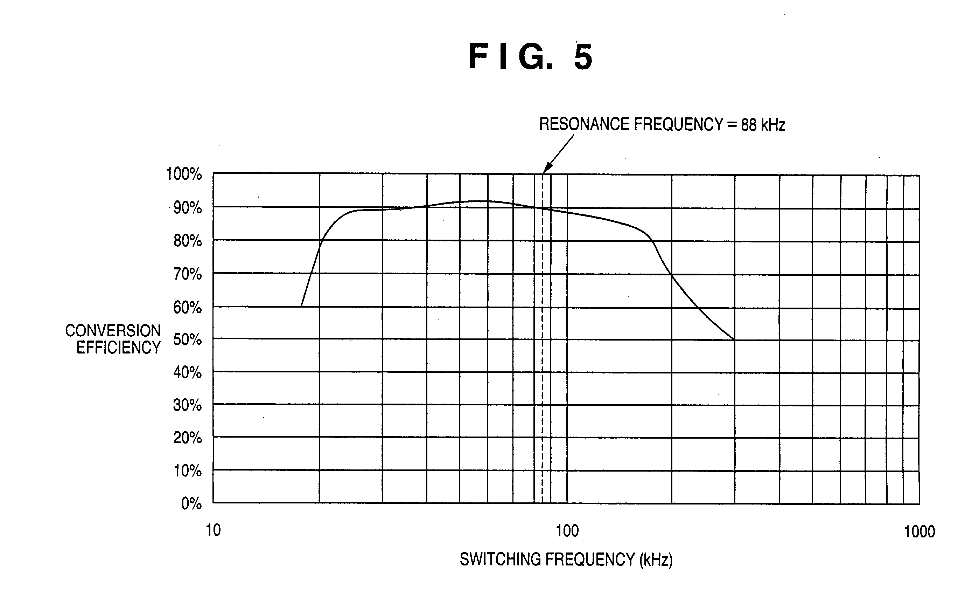

The solar cell power supply of the embodiment was operated under intense solar radiation (1.0 kW/m², cell temperature = 55°C) while the switching frequency was changed. Consequently, as shown in Fig. 5, the conversion efficiency peaked at a switching frequency slightly lower than the self-resonance frequency (88 kHz). The conversion efficiency abruptly decreased when the switching frequency was lower than 22 kHz or higher than 196 kHz. This indicates that in the frequency region found by the present inventors, i.e., in the frequency region 0 . 25 to 2 times the self-resonance frequency, a change in conversion frequency is small, and a high conversion frequency is maintained. Especially in a frequency region 0.5 to 1 time the self-resonance frequency, a very high conversion efficiency was obtained.

Scientifically, the lower limit of the frequency region in which the conversion efficiency is high is presumably related to the nonlinearity (saturation) of the magnetic core, and the upper limit of the region is probably caused by an increase in reactive current caused because a rectangular wave applied to the transformer contains a large amount of harmonic contents, an increase in core loss, a rise in AC resistance on an electric wire, and a rise in loss of the switching element. However, parameters by which a frequency region in which the conversion efficiency is high can be easily specified are conventionally unknown. The present inventors made extensive studies and found that a high-conversion-efficiency frequency region can be specified very easily by using the self-resonance frequency of the transformer as a parameter.

When the voltage is low and the electric current is large (1 V and 10 A in this embodiment) on the primary side of the transformer and the boosting ratio exceeds 1 : 100, the amount of electric wire used in the transformer is increased by making the primary winding parallel and increasing the number of turns of the secondary winding. This increases the parasitic stray capacity of the transformer and partly causes a reduction in self-resonance frequency. Also, to increase the conversion efficiency, a high-permeability magnetic material is used as the magnetic core to reduce the leakage flux, thereby enhancing the coupling between the primary and secondary sides. Since this increases the primary inductance, the self-resonance frequency is further decreased. This fact is found by the research by the present inventors . Compared to a transformer having a low boosting ratio, a transformer having a high boosting ratio presumably has a very narrow frequency region in which a high conversion efficiency is obtained. Accordingly, it is very effective to be able to easily determine a switching frequency from the self-resonance frequency of the transformer.

### Second Embodiment

The second embodiment according to the present invention will be described below. In this embodiment, the same reference numerals as in the first embodiment denote substantially the same parts, and a detailed explanation thereof will be omitted.

The second embodiment demonstrates that the same effects as in the first embodiment can be obtained even when the arrangement of a transformer 4 and the circuit configuration of the secondary side are changed.

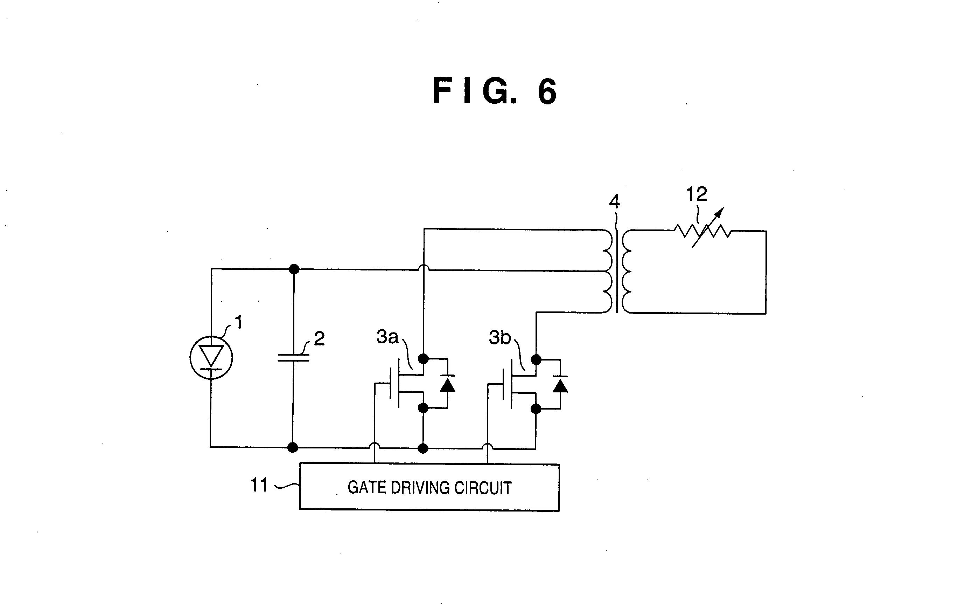

Fig. 6 is a circuit diagram showing the circuit configuration of a solar cell power supply of the second embodiment.

### [Transformer]

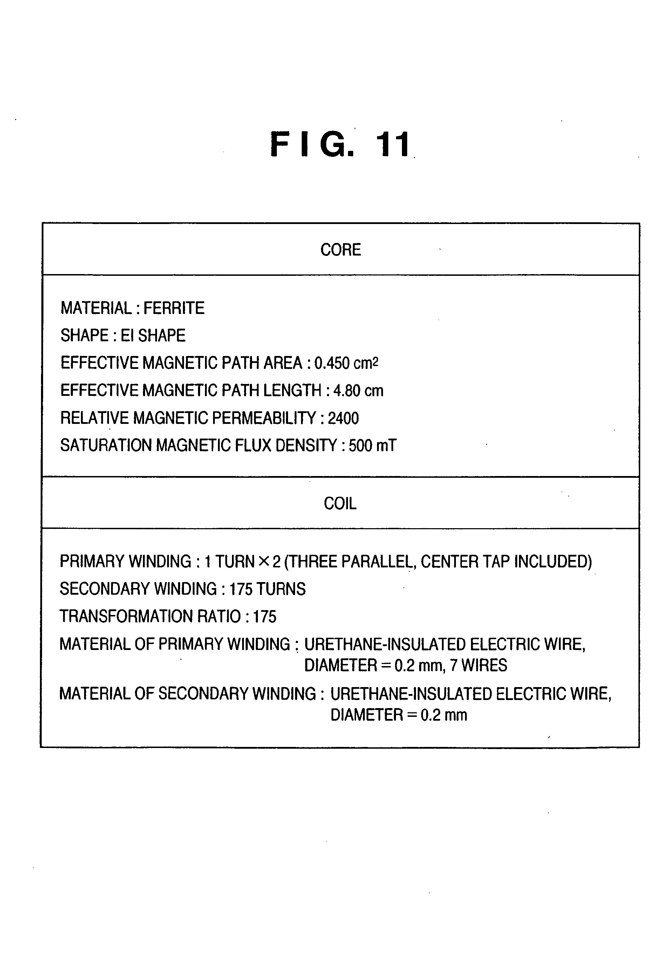

Fig. 11 shows the specifications of the transformer 4 of the second embodiment.

When measured by the same method of the first embodiment, the self-resonance frequency of the transformer 4 of the second embodiment was 37 kHz, much lower than that of the transformer 4 of the first embodiment. This is probably because the size of the magnetic core was larger than that of the transformer 4 of the first embodiment, and this increased the inductance of the primary winding.

### [Load]

An AC load was used in the second embodiment. More specifically, a planar heater (resistance = 1 to 10 kΩ) as a resistor was used.

### [Operation Check]

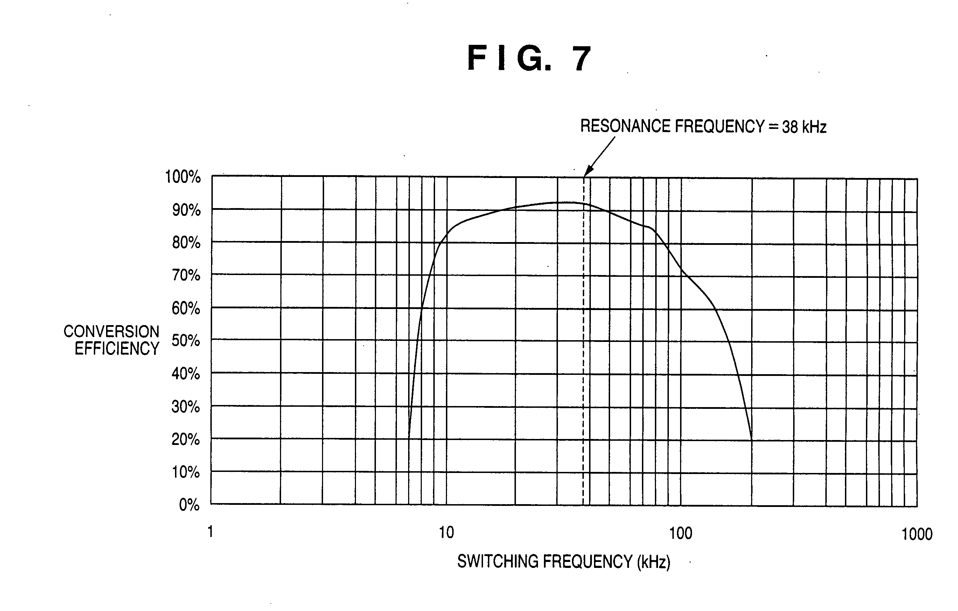

Under the same conditions as in the first embodiment, the power conversion efficiency was measured by changing the switching frequency. As shown in Fig. 7, the conversion efficiency peaked at a switching frequency slightly lower than the self-resonance frequency (38 kHz). As in the first embodiment, a high conversion efficiency was obtained in the frequency region found by the present inventors. This indicates that even when the type of load and the arrangement of the transformer are changed, a high conversion efficiency can be maintained if the switching frequency is held in the frequency region found by the present inventors.

### Third Embodiment

The third embodiment according to the present invention will be described below. In this embodiment, the same reference numerals as in the first embodiment denote substantially the same parts, and a detailed explanation thereof will be omitted.

In the third embodiment, the present invention is applied to a system interconnection type power generation system which is the recent most popular solar cell power generation system.

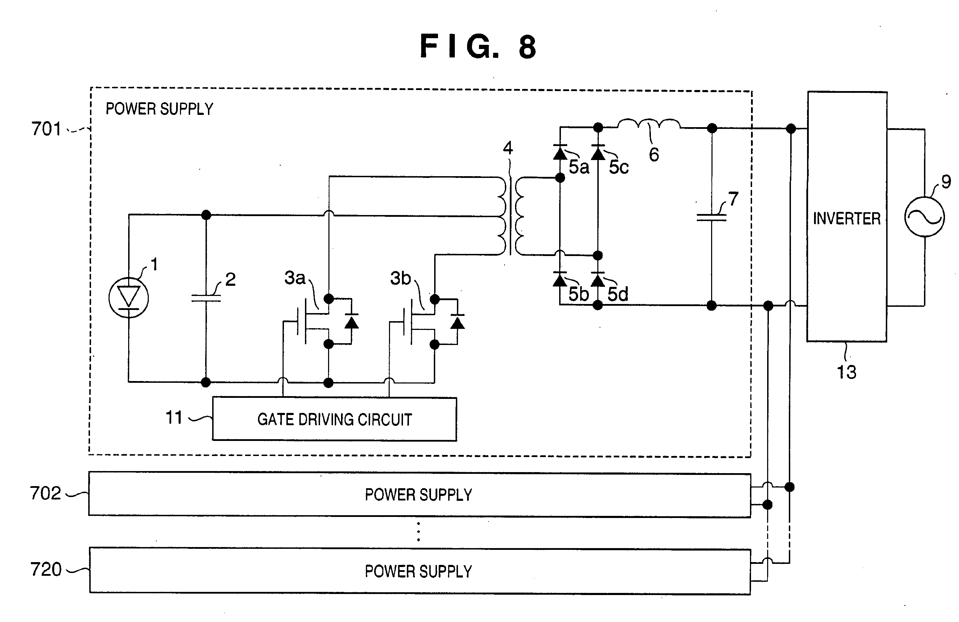

Fig. 8 is a circuit diagram showing the circuit configuration of a solar cell power supply of the third embodiment.

In the third embodiment, 20 solar cell power supplies 701 which function as step-up converters are connected in parallel. The DC output power from these power supplies is supplied to a system interconnection type inverter 13, and AC power is supplied to a system 9. Each solar cell power supply 701 has the same arrangement as in the first embodiment except for a transformer 4, and outputs 9 to 10 W. The solar cell power supplies 701 are operated in parallel in order to drive the commercially available inverter 13 which requires an input of at least about 100 W to output a few kW. If an inverter matching the output (about 10 W) of the solar cell power supply 701 is available, the solar cell power supplies 701 need not be operated in parallel.

### [Transformer]

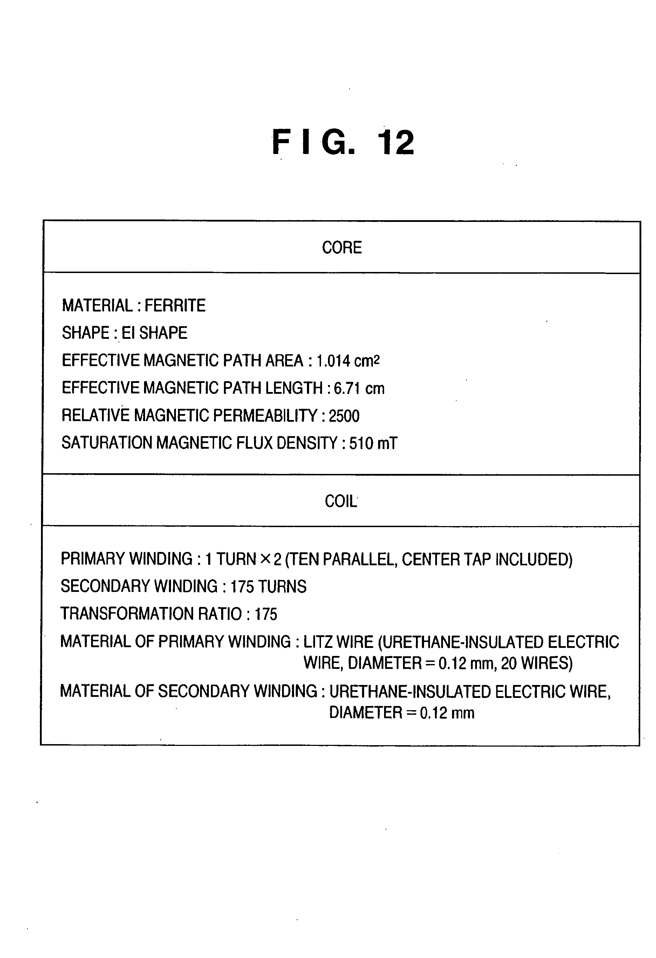

Fig. 12 shows the specifications of the transformer 4 of the third embodiment.

Although the magnetic core was larger than that of the transformer 4 of the second embodiment, the self-resonance frequency of the transformer 4 of the third embodiment was 46 kHz, higher than that of the transformer 4 of the second embodiment. This is presumably because, e.g., the parasitic stray capacity of the transformer 4 was decreased by a litz wire and by improvement of the way the wire was wound (in the third embodiment, split winding was used).

The self-resonance frequency can be changed by improving the winding method and inserting a gap or cavity into the magnetic core. Accordingly, a solar cell power supply having a high conversion efficiency can be obtained by controlling the self-resonance frequency while the switching frequency is fixed. However, this method is not as easy as changing the switching frequency because the method is affected by a number of factors such as the winding structure.

### [Solar Cell Power Supply]

To supply an electric current of 10 A output from a solar cell 1 having a low voltage output (1.0 V) to the transformer 4 with low loss, a collecting terminal of the solar cell 1 is formed close to the transformer 4. More specifically, when the distance at which the collecting terminal and the primary winding of the transformer 4 are electrically connected is 10 cm or less, the connection is easy, and the loss can be decreased. Substantially, it is important to reduce the resistance of a line for the connection, so these parts are connected by a line which is sufficiently thick and short. Note that it is easy to connect a fuel cell instead of the solar cell 1, so this power supply is of course also applicable as a fuel cell power supply.

### [Inverter]

A number of well-known inverters can be used as the inverter 13. In the third embodiment, however, a commercially available system interconnection type inverter (SI-04 manufactured by CANON INC., rated output = 4.5 kW) including a full-bridge main circuit and maximum power control circuit is used. Since the inverter 13 is not closely related to the substance of the present invention, a detailed description thereof will be omitted. The system 9 is a common 60-Hz, 200-V single-phase three-wire system. The frequency and voltage can be readily changed, so 50 Hz and 100 V, for example, can be selected as needed.

### [Operation Check]

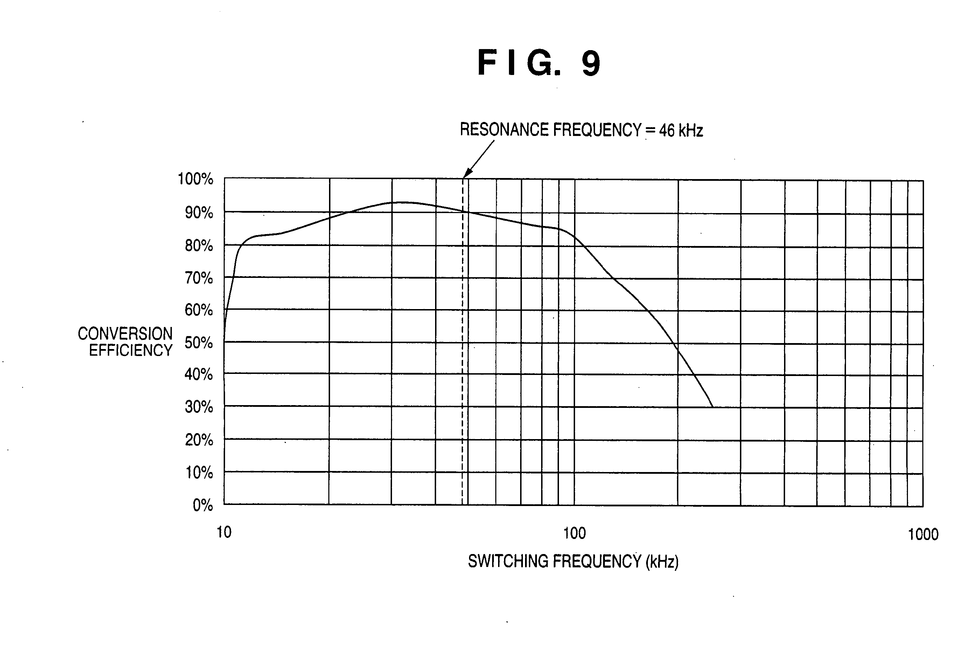

The operation was checked in the same manner as in the other embodiments. Fig. 9 shows the result of measurement of the conversion efficiency as a function of the switching frequency. As in the other embodiments, the conversion efficiency peaked at a switching frequency slightly lower than the self-resonance frequency (46 kHz). Also, as in the other embodiments, a high conversion efficiency was obtained in the frequency region found by the present inventors. This indicates that even when the system interconnection type inverter 13 is used as a load, a high conversion efficiency can be maintained if the switching frequency is held in the frequency region found by the present inventors.

In each embodiment described above, a power supplying apparatus having a high conversion efficiency can be rapidly manufactured, and the output from a solar cell power supply can be increased by the increase in conversion efficiency, thereby decreasing the power generation cost. In addition, a very simple power conversion circuit is obtained by controlling the switching element by fixed on-duty. This decreases the cost of the power supplying apparatus.

The present invention is not limited to the above embodiments and various changes and modifications can be made within the sprit and scope of the present invention. Therefore, to apprise the public of the scope of the present invention the following claims are made.

Although increasing the switching frequency is effective to downsize a power supplying apparatus, the switching loss of a switching element increases if the switching frequency is increased. In a power supplying apparatus including a transformer having a very high boosting ratio, and a plurality of switching elements for supplying AC power to the primary side of the transformer, the frequency of the AC power is set to 0.25 to 2 times the self-resonance frequency of the transformer.

## Claims

1. A power supplying apparatus comprising:
a transformer having a very high boosting ratio; and
a plurality of switching elements for supplying AC power 0.25 to 2 times a self-resonance frequency of said transformer to a primary side of said transformer.

2. The apparatus according to claim 1, wherein a frequency of the AC power is 0.5 to 1 time the self-resonance frequency of said transformer.

3. The apparatus according to claim 1, wherein said switching element is driven by fixed on-duty.

4. The apparatus according to claim 1, further comprising a plurality of rectifying elements connected to a secondary side of said transformer to convert the AC power generated from input DC power to said apparatus into DC power having a predetermined voltage.

5. The apparatus according to claim 4, wherein the input DC power is directly supplied from a solar cell or fuel cell.

6. The apparatus according to claim 1, wherein said transformer has a center tap on the primary side, and said transformer and said plurality of switching elements form a push-pull switching circuit.

7. The apparatus according to claim 1, wherein the boosting ratio of said transformer is not less than 1 : 100.

8. The apparatus according to claim 1, wherein said power supplying apparatus is not a resonant-mode power supply.

9. A design method of a power supplying apparatus comprising a transformer having a very high boosting ratio, and a plurality of switching elements for supplying AC power to a primary side of the transformer, the method comprising a step of setting a frequency of the AC power to 0.25 to 2 times a self-resonance frequency of the transformer.

10. The method according to claim 9, wherein a frequency of the AC power is set to 0.5 to 1 time the self-resonance frequency of the transformer.

11. The method according to claim 9, wherein the power supplying apparatus is not a resonant-mode power supply.

12. A power generation apparatus comprising:
the power supplying apparatus cited in claim 1; and
a solar cell or fuel cell for supplying DC power directly to said power supplying apparatus.

13. The apparatus according to claim 12, further comprising a power converter for converting output DC power from said power supplying apparatus into AC power, and supplying the AC power to an AC power system.
